# EUROPEAN PATENT APPLICATION

(11) **EP 4 339 173 A1**
(43) Date of publication of application: **20.03.2024**
(21) Application number: 22195740.0
(22) Date of filing: 14.09.2022
(51) Int. Cl.: C04B 22/00, C04B 28/04, C04B 28/06, C04B 28/08, C04B 40/00

(54) **METHODS AND ADMIXTURES FOR THE IMPROVEMENT OF THE WORKABILITY OF AN ETTRINGITE-FORMING CEMENTITIOUS COMPOSITION**

(71) Applicant: Sika Technology AG, 6340 Baar (CH)
(72) Inventor: JUILLAND, Patrick, 3005 Bern (CH); FRUNZ, Lukas, 8305 Dietlikon (CH); SCHÖNENBERGER, Denise, 8483 Kollbrunn (CH); GALLUCCI, Emmanuel, 8048 Zürich (CH); PEGADO, Luis, 5200 Brugg (CH); EBERHARDT, Arnd, 8400 Winterthur (CH)
(74) Representative: Sika Patent Attorneys

(57) **Abstract**

The present invention relates to methods for the improvement of workability of an ettringite-forming cementitious composition comprising the steps of adding ettringite nuclei and adding at least one polycarboxylate ether to the cementitious composition. The present invention also relates to admixtures comprising ettringite nuclei and polycarboxylate ethers and cementitious compositions comprising them.

## Description

### Technical Field

The present invention relates to ettringite-forming cementitious compositions typically used in construction, for example concrete. More precisely, the present invention relates to methods and admixtures for the improvement of the workability of ettringite-forming cementitious compositions.

### Background of the invention

Polycarboxylate ethers (PCE) are a well-known group of additives for cementitious compositions, especially for mortars and concrete. PCE are typically added to the dry mix of cementitious compositions or are added together with the mixing water. PCE can improve the workability of cementitious compositions at a given water to powder ratio. PCE can likewise reduce the water demand of a cementitious composition. This means that less water is needed to achieve a desired consistency or workability.

However, even though polycarboxylate ethers can be very effective in improving the workability, they are typically also quite sensitive to variations in the cementitious composition, for example due to fluctuations in the raw material quality. One reason for this sensitivity is that PCE are susceptible to the formation of ettringite at very early stages of cement hydration.

Thus, in a cementitious composition capable of forming ettringite varying dosages of a given PCE are often required to achieve the desired improvement of workability. This makes the calculation of PCE dosage and the manufacture of such cementitious compositions more complex. One possibility to counter such variable performance is to add the PCE several minutes after the mixing water, when ettringite formation is already advanced. However, such mix protocols are not desirable in concrete batching plants because they need additional time and thus add cost. In the formulation of dry mixes, for example dry mortars, such mix protocols are obviously not possible.

Another approach is disclosed in WO 2011/162878 which teaches a method for controlling rheology of cementitious compositions characterized in that measured rheological values, e.g. slump, are compared to optimal rheological values and rheology modifying agents, e.g. PCE, are dosed according to the calculated differences. However, this method only offers the possibility to add additional PCE in cases where PCE performance is lower.

It is also known from WO 2012/072450 and WO 2015/028402 that ettringite may form part of hardening accelerators for building materials. According to WO 2015/028402, a PCE is used in the preparation of the ettringite containing hardening accelerator. However, none of these applications deal with the influence of ettringite on the workability of building materials comprising PCE.

There is a thus a continued need for solutions to the problem of variations in the performance of polycarboxylate ethers, especially when polycarboxylate ethers are used to improve the workability of cementitious compositions capable of forming ettringite.

### Summary of the invention

It is an objective of the present invention to provide methods for the improvement of the workability of an ettringite-forming cementitious composition. Especially "improvement of the workability" means that the workability, preferably the slump and/or slump flow, is increased at a defined dosage of polycarboxylate ethers (PCE) and/or that the effect of PCE is more robust. Likewise, "improvement of the workability" may also refer to a reduction of PCE dosage to achieve a desired workability, preferably slump and/or slump loss.

It is another objective of the present invention to mitigate the susceptibility of the polycarboxylate ethers with respect to ettringite formation in cementitious compositions at very early stage. Especially such mitigation should be possible without a need for adjustment of the mix protocol of the cementitious composition.

Preferably, a method of the present invention does not influence the development of strength, especially compressive strength, of the cementitious composition after mixing with water.

It has been found that, surprisingly, the addition of ettringite nuclei to the cementitious composition results in the desired effects. Without wishing to be bound by theory, it may be assumed that the addition of ettringite nuclei prevents the formation of ettringite in the cementitious composition upon addition of mixing water because ettringite can instantaneously grow on the added ettringite nuclei. The stabilization of ettringite nuclei is therefore avoided and PCE are therefore not overconsumed.

It has also been surprisingly found that a lower dosage of PCE is possible in a given cementitious composition to achieve the same workability where ettringite nuclei are added to said cementitious composition. Another advantage is that the addition of ettringite nuclei to a cementitious composition generally leads to a faster hydration reaction of cementitious binders.

Therefore, the objectives of the present invention can be solved by a method as claimed in claim 1.

Further aspects of the present invention are the subject of independent claims. Preferred embodiments are the subject of dependent claims.

### Ways for carrying out the invention

In a first aspect the present invention relates to a method for the improvement of the workability of an ettringite-forming cementitious composition, said method comprising the steps of
(i) providing a cementitious composition which comprises an ettringite-forming binder,
(ii) adding ettringite nuclei to said cementitious composition, and
(iii) adding at least one polycarboxylate ether to said cementitious composition, wherein step (ii) is done before and/or together with step (iii).

Ettringite is known under the chemical formula Ca₆[Al(OH)₆]₂(SO₄)₃ • 26 H₂O. According to the notation more usual in construction chemistry, the oxidic empirical formula reads as follows: 3CaO • Al₂O₃ • 3CaSO₄ • 32H₂O. Ettringite is a mineral from the mineral class of the hydrous sulfates with foreign anions. It crystallizes in the monoclinic crystal system and develops usually well-pronounced, prismatic or acicular, pseudohexagonal crystals. Ettringite is formed under alkaline conditions from calcium salts, aluminium salts and sulfates. A suitable method to make ettringite nuclei is disclosed in example 1 of WO 2012/072450. Ettringite is also formed in the initial stage of the hydration of Portland cements. In particular, the term "ettringite nuclei" refers to finely dispersed forms of ettringite.

An ettringite-forming cementitious composition accordingly is a cementitious composition which forms ettringite when contacted with water. Likewise, a cementitious composition comprising an ettringite-forming binder forms ettringite when contacted with water. Especially, the ettringite-forming cementitious composition comprises a binder capable of forming ettringite. Preferably the ettringite-forming binder is selected from Portland cement, calcium sulfoaluminate cement, aluminate cement, slag, especially ground granulated blast furnace slag, and/or clay, especially calcined clay such as metakaolin, optionally in combination with calcium sulfate. Especially, the ettringite-forming binder is selected from Portland cement and/or calcium sulfoaluminate cement.

Within the present context, Portland cement can be any cement according to standard EN 197-1. In particular type CEM I, CEM II, CEM III, CEM IV, and/or CEM V, especially CEM I (also called Ordinary Portland Cement - OPC). Portland cements according to other international standards, e.g. ASTM standards or Chinese standards, can be used as well. The term "aluminate cement" stands in particular for a cement with an aluminium content, measured as Al₂O₃, of at least 30 wt.-%, especially at least 35 wt.-%, in particular 35 - 58 wt.-%. Preferably, the aluminate cement is aluminate cement according to standard EN 14647. According to certain embodiments, mixtures of Portland cement, calcium sulfoaluminate cement, aluminate cement, slag, especially ground granulated blast furnace slag, and/or clay, especially calcined clay such as metakaolin, and optionally calcium sulfate, are used. The weight ratios in such mixtures are not particularly limited and may vary in wide ranges.

Portland cement and calcium sulfoaluminate cement always comprise sulfate. In case of Portland cement sulfate typically is present in the form of calcium sulfate which is added to Portland clinker during cement production. Aluminate cement, slag, and/or clay may not comprise sufficient sulfate to form ettringite and in case where aluminate cement, slag, and/or clay without sufficient sulfate to form ettringite are used, a sufficient amount of sulfate to form ettringite has to be added.

Especially the ettringite-forming binder is a cementitious binder. Especially preferably the cementitious binder is selected from Portland cement and/or calcium sulfoaluminate cement.

A cementitious composition of the present invention may contain other materials besides the ettringite-forming binder. Other materials may be materials normally encountered in mortar and concrete compositions. According to embodiments, a cementitious composition of the present invention comprises or consists of
(i) at least one ettringite-forming binder, preferably cementitious binder,
(ii) optionally further binders which do not form ettringite,
(iii) aggregates and/or fillers,
(iv) additives different from ettringite nuclei and polycarboxylate ether.

According to embodiments, ettringite nuclei of the present invention are nano-materials. Especially, ettringite nuclei of the present invention are needle shaped. Preferably, an aspect ratio of ettringite nuclei of the present invention is between 2 - 20, preferably between 3 - 10.

The aspect ratio is the ratio of the length of an elongated object to its width. Length and width of ettringite nuclei can, for example, be determined by image analysis from micrographs obtained by scanning electron microscopy. A suitable method is for example described in the article "Determining the size distribution-defined aspect ratio of rod-like particles" by D. Gantenbein et al in Applied Clay Science, 2011, 53(4), 538-543.

Preferably the ettringite nuclei have an average length of between 1 nm - 1 µm, more preferably between 10 nm - 500 nm, especially between 20 nm - 200 nm. Equally preferably or additionally, the ettringite nuclei have a width of between 0.1 nm - 100 nm, more preferably between 1 nm - 50 nm, especially between 2 nm - 20 nm.

The particle size can be determined by laser diffraction as described in ISO 13320:2020. In particular, a Mastersizer 2000 instrument with a Hydro 2000G dispersion unit and the Mastersizer 2000 software from Malvern Instruments GmbH (Germany) is used. Isopropanol, for example, is suitable as the measuring medium. Preferably, a particle size of non-spherical or irregular particles is represented by the equivalent spherical diameter of a sphere of equivalent volume. The average particle size corresponds in particular to the D50 value (50% of the particles of a given assembly of particles are smaller than the given value, 50% are correspondingly bigger).

According to embodiments, ettringite nuclei of the present invention have an average particle size D50 of below 1 micron.

Ettringite nuclei may also be described by their specific surface area. The specific surface area may be measured by the BET-method. Especially, the BET surface of ettringite nuclei is measured by a method as described in standard ISO 9277:2010 using nitrogen gas.

According to embodiments, ettringite nuclei of the present invention have a BET surface of between 2 - 150 m²/g, preferably of between 5 - 50 m²/g, especially of between 10 - 20 m²/g.

According to embodiments, in a method of the present invention, ettringite nuclei are added in an amount of 0.01 - 3 w%, preferably 0.1 - 1.0 w%, more preferably 0.5 - 1.0 w% relative to the ettringite-forming binder, especially cementitious binder.

A polycarboxylate ether within the present context is a polymer comprising a polycarboxylate backbone and polyether side chains attached thereto. Polycarboxylate ethers are also abbreviated as PCE.

According to embodiments, the at least one polycarboxylate ether added in a method of the present invention comprises structural units **M1** of the formula I 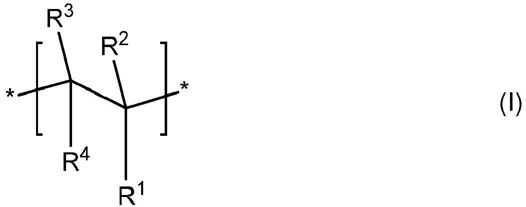 and structural units **M2** of the formula II 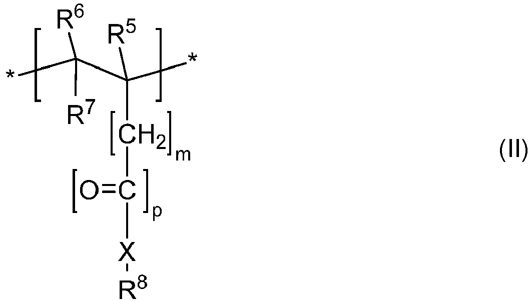 where
R¹, in each case independently, is -COOM, -SO₂-OM, -O-PO(OM)₂ and/or -PO(OM)₂, preferably -COOM
R², R³, R⁵ and R⁶, in each case independently, are H or an alkyl group having 1 to 5 carbon atoms,
R⁴ and R⁷, in each case independently, are H, -COOM or an alkyl group having 1 to 5 carbon atoms,
or where R¹ forms a ring together with R⁴ to give -CO-O-CO-,
M, independently of one another, represents H⁺, an alkali metal ion, an alkaline earth metal ion, a di- or trivalent metal ion, an ammonium ion or an organic ammonium group;
m = 0, 1 or 2,
p = 0 or 1,
X, in each case independently, is -O-, -NH-,
R⁸ is a group of the formula -(CH₂)_{z}-[AO]ₙ-R^{a}, where z = 0, 1, 2, 3, or 4, and where A = C₂- to C₄-alkylene, R^{a} is H, a C₁- to C₂₀-alkyl group, -cycloalkyl group or - alkylaryl group, and n = 2-250, especially 10-200.

According to preferred embodiments, the side chain R⁸ of a PCE of the present invention is -(CH₂)_{z}-[AO]ₙ-R^{a} where z = 0, A is C₂ alkylene, n = 11 - 350, preferably 22 - 250, and R^{a} is H or methyl.

According to further preferred embodiments, the molar ratio of structural units **M1** to structural units **M2** in a PCE of the present invention is 10 : 90 - 80 : 20.

PCE of the present invention preferably have an average molecular weight Mw in the range of 1000 - 1000000, more preferably 1500 - 500000, most preferably 2000 - 100000, in particular 3000 - 75000 or 3000 - 50000 g/mol. The molar mass Mw is determined by gel permeation chromatography (GPC) with polyethylene glycol (PEG) as standard. This technique is known to the person skilled in the art.

PCE according to the invention can be random or non-random copolymers. Non-random copolymers are in particular alternating copolymers or block or gradient copolymers or mixtures thereof.

PCE according to the present invention can be prepared by free radical polymerization of mixtures comprising at least one olefinically unsaturated carboxylic acid monomer of the general structure (Ia) 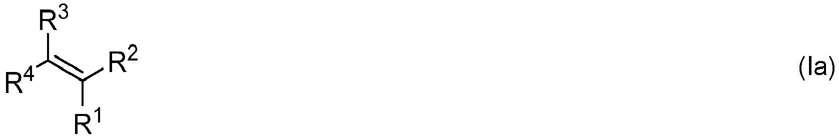 and at least one olefinically unsaturated monomer of the general structure (IIa) 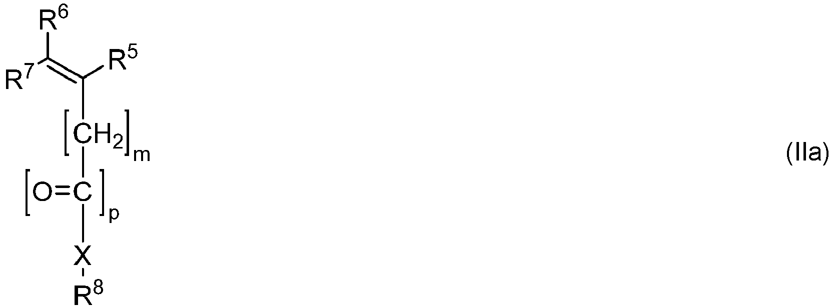 wherein R¹, R², R³, R⁴, R⁵, R⁶, R⁷, R⁸, m, p, and X have the meaning as given in formulae (I) and (II) above.

Suitable conditions for carrying out the free radical polymerization are known per se to the person skilled in the art and are described, for example, in EP 1 103 570.

PCE according to the present invention can also be prepared by a polymer analogue reaction. In particular, PCE according to the present invention can be prepared by esterification of a homo- or copolymer comprising repeating units of the general formula (I) with polyalkylene glycols of the general formula (III)

HO-R⁸ (III),

wherein R⁸ is as defined above.

Suitable processes for the preparation of PCE according to the invention by esterification are known to the skilled person per se and are described, for example, in EP 1 138 697 (Sika AG).

In addition to the at least one olefinically unsaturated carboxylic acid monomer of the general structure (Ia) and the at least one olefinically unsaturated macromonomer of the general structure (IIa), PCE according to the present invention may contain one or more further monomers **M3.** These further monomers **M3** may be selected from styrene, ethylene, propylene, butylene, butadiene, isoprene, vinyl acetate, vinyl chloride, acrylonitrile, N-vinylpyrrolidone and/or hydroxyalkyl(meth)acrylates.

It is preferred that the molar fraction of the one or more further monomers **M3** is equal to or less than 66 mol%, preferably equal to or less than 50 mol%, more preferably equal to or less than 25 mol%, particularly preferably equal to or less than 10 mol%, especially equal to or less than 5 mol%, in each case relative to all the monomers constituting the PCE. In a very particularly preferred embodiment, the PCE is essentially free of further monomer units **M3.**

According to embodiments, in a method of the present invention, the at least one polycarboxylate ether is added in an amount of 0.05 - 10 w%, preferably 0.1 - 1 w%, more preferably 0.1 - 0.2 w%, relative to the ettringite-forming binder, especially the cementitious binder.

It is possible to add only one polycarboxylate ether in a method of the present invention. It is, however, also possible to add a mixture of two, three, or more polycarboxylate ether.

The way of adding the ettringite nuclei in step (ii) of a method of the present invention and of adding the polycarboxylate ether in step (iii) of a method of the present invention is not particularly limited.

It is, for example, possible in a method of the present invention to add the ettringite nuclei and the polycarboxylate ether into a suitable mixer during production of a dry cementitious composition, especially a dry mortar. A dry cementitious composition is essentially free of water. This means that the content of water is, for example, below 1 w%, preferably below 0.5 w%, based on the total weight of the dry cementitious composition. Ettringite nuclei and polycarboxylate ether are thus intermixed with other components of the dry cementitious composition. It is likewise possible to add only the ettringite nuclei into a suitable mixer during production of a dry cementitious composition, especially a dry mortar. Ettringite nuclei are thus intermixed with other components of the dry mortar. The at least one polycarboxylate ether may then be added later, for example together with the mixing water. Mixers can be any mixers known to the skilled person and suitable to produce dry mortars. Typically, mixing protocols need not be adapted in these cases.

According to embodiments, in a method of the present invention, the ettringite nuclei are added to the dry cementitious composition. Thus, according to embodiments, the ettringite nuclei are added to the cementitious composition before addition of any mixing water. Preferably, when added to a dry cementitious composition, ettringite nuclei are in powder form.

It is also possible in a method of the present invention to add the ettringite nuclei and the polycarboxylate ether into a suitable mixer during production of a wet cementitious composition, especially a concrete.

According to embodiments, in a method of the present invention, the ettringite nuclei are added to the cementitious composition together with the mixing water. Preferably, in this case, the ettringite nuclei are suspended in the mixing water. Thus, according to embodiments, in a method of the present invention additionally mixing water is added to the cementitious composition and the ettringite nuclei are added together with said mixing water.

It is, in any case, important that the ettringite nuclei are added before and/or together with the polycarboxylate ether, but not after the addition of polycarboxylate ether. This means, that in a method of the present invention step (ii) is done before and/or together with step (iii). Step (ii) is not done after step (iii).

It can be preferred if step (iii) is done some time after step (ii). This means, that the at least one polycarboxylate ether is added shortly after the addition of the ettringite nuclei. According to embodiments, in a method of the present invention, step (iii) is done within not more than 1 minute, preferably not more than 45 seconds, especially preferably not more than 30 seconds after step (ii). It is, however, generally preferred to keep the time between step (ii) and step (iii) of a method of the present invention as short as possible, because a longer time will lead to a longer mixing protocol and thus add additional cost. According to especially preferable embodiments, step (ii) is done together with step (iii). "Together with" in this context means "at the same time".

Especially "improvement of workability" within the present context means that the workability is increased at a defined dosage of PCE, that the same workability can be achieved at a lower dosage of PCE, and/or that the effect of the PCE on workability is more robust. Suitable measures for the workability are, for example, the slump and/or the slump flow. Slump can be measured according to standard EN 12350-2:2019. Slump flow can be measured according to standard EN 12350-5:2019.

It is preferred that in a method of the present invention no calcium silicate hydrates are being added.

In a second aspect, the present invention relates to an admixture suitable in a method as described above, said admixture comprising ettringite nuclei and at least one polycarboxylate ether, wherein the at least one polycarboxylate ether comprises structural units **M1** of the formula I 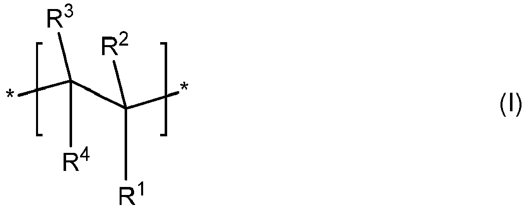 and structural units **M2** of the formula II 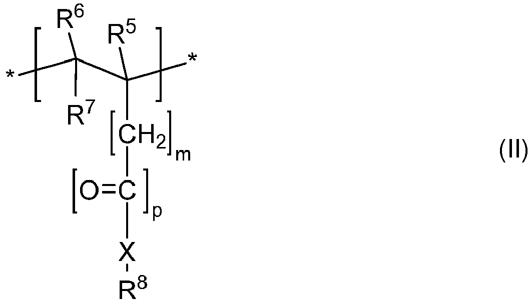 where
R¹, in each case independently, is -COOM, -SO₂-OM, -O-PO(OM)₂ and/or -PO(OM)₂, preferably -COOM,
R², R³, R⁵ and R⁶, in each case independently, are H or an alkyl group having 1 to 5 carbon atoms,
R⁴ and R⁷, in each case independently, are H, -COOM or an alkyl group having 1 to 5 carbon atoms,
or where R¹ forms a ring together with R⁴ to give -CO-O-CO-,
M, independently of one another, represents H⁺, an alkali metal ion, an alkaline earth metal ion, a di- or trivalent metal ion, an ammonium ion or an organic ammonium group;
m = 0, 1 or 2,
p = 0 or 1,
X, in each case independently, is -O-, -NH-,
R⁸ is a group of the formula -(CH₂)_{z}-[AO]ₙ-R^{a}, where z = 0, 1, 2, 3, or 4, where A = C₂- to C₄-alkylene, R^{a} is H, a C₁- to C₂₀-alkyl group, -cycloalkyl group or - alkylaryl group, and n = 2-250, especially 10-200.

All features and embodiments described in a previous aspect also apply to this aspect of the invention. Especially, according to embodiments, the ettringite nuclei may have an aspect ratio, length, width, particle size D50, and/or BET surface as described above.

According to embodiments, in an admixture of the present invention, the ettringite nuclei are dispersed in a dispersion or solution of the at least one polycarboxylate ether in a liquid, preferably in water. The admixture is thus a one-component admixture. This may have the advantage of particular easy dosing.

According to other embodiments, an admixture of the present invention is characterized in that the ettringite nuclei and the at least one polycarboxylate ether are present in spatially separate containers. The admixture is thus a two-component or multi-component admixture. This may have the advantage of easily adjustable ratios of ettringite nuclei and at least one polycarboxylate ether.

According to embodiments, an admixture of the present invention comprises or consists of (in each case relative to the total weight of the admixture)
a) 0.1 - 15 w%, preferably 0.5 - 5 w% of ettringite nuclei,
b) 5 - 50 w%, preferably 10 - 35 w% of at least one polycarboxylate ether wherein the at least one polycarboxylate ether comprises structural units **M1** and **M2** as described above, and
c) 45 - 90 w%, preferably 60 - 85 w% of water.

Preferably, an admixture of the present invention is dosed at 0.1 to 20 w%, more preferably 1 to 5 w% relative to the ettringite-forming binder, especially cementitious binder.

A cementitious composition of the present invention can be a dry mix. A dry mix is essentially free of water. This means that the content of water is, for example, below 1 w%, preferably below 0.5 w%, based on the total weight of the dry mix. A cementitious composition of the present invention can also be a dry mix mixed up with a liquid, preferably water. Such mix is also called a wet mix. The term "improvement of workability" as used within the present context only applies to wet mixes, i.e. to cementitious compositions after mixing with a liquid, preferably water.

The term "cementitious composition" within the present context relates to a material in the non-hardened or uncured state.

In another aspect, the present invention relates to a cementitious composition comprising
a) at least one ettringite-forming binder, especially cementitious binder,
b) ettringite nuclei, and
c) at least one polycarboxylate ether comprising structural units **M1** and **M2** as described above, and
d) optionally water.

All features and embodiments described in a previous aspect also apply to this aspect of the invention. Especially, according to embodiments, the ettringite nuclei may have an aspect ratio, length, width, particle size D50, and/or BET surface as described above.

The cementitious composition is obtainable or is obtained by a method of the present invention.

According to embodiments, a cementitious composition of the present invention comprises
a) 5 - 99 w% of at least one ettringite-forming binder, especially cementitious binder,
b) 0.01 - 3 w%, preferably 0.1 - 1.0 w%, more preferably 0.5 - 1.0 w%, relative to the at least one ettringite-forming binder, especially cementitious binder, of ettringite nuclei,
c) 0.05 - 10 w%, preferably 0.1 - 1 w%, more preferably 0.1 - 0.2 w%, relative to the at least one ettringite-forming binder, especially cementitious binder, of at least one polycarboxylate ether comprising structural units **M1** and **M2** as described above, and
d) optionally water.

According to preferred embodiments, the cementitious composition is a dry mix, especially a dry mortar. The dry mix is essentially free of water. The amount of water present in the dry mix is below 1 w%, preferably below 0.5 w%, relative to the total weight of the dry mix.

A cementitious composition of the present invention may contain other materials normally encountered in mortar and concrete compositions. Such other materials may be other binders which do not form ettringite, aggregates, fillers, and/or additives different from ettringite nuclei and polycarboxylate ethers.

### Examples

### Preparation of ettringite nuclei

Ettringite nuclei were prepared in a precipitation reaction as follows:
Calcium oxide was added to deionized water in an amount of appr. 3 g/L. The resulting suspension was vigorously stirred for 2h and then filtered to yield a saturated solution of calcium hydroxide.

125 g of Al₂(SO₄)₃·16H₂O were added to 1 L of deionized water. The resulting suspension was vigorously stirred for 2h at 60°C and then filtered to yield a solution of aluminium sulfate.

The saturated solution of calcium hydroxide was added to the solution of aluminium sulfate and the mixture was left standing for 24h at 23°C. The precipitate which formed are ettringite nuclei and these ettringite nuclei were then filtered off and rinsed with a small quantity of deionized water.

### Tests with ettringite-forming binder

The PCE used in the examples was a polymer with a polymethacrylate backbone (average molecular weight Mw = 7'000 g/mol) and partially esterified with methyl-terminated polyethylene glycol (mixture of two types with average molecular weight Mw = 1'000 g/mol and Mw = 3'000 g/mol respectively used in a ratio of 1:3.5 by weight) and with a molar ratio of carboxylate groups to ester groups of appr. 3. The comb polymer has an average molecular weight Mw determined by GPC against a PEG standard of appr. 44000 g/mol.

For the following tests, a cement CEM I 42.5R from Heidelberg Zement AG was mixed for 1 minute with water to realize a water to cement ratio of 0.35. The respective amounts of ettringite and PCE as indicated in below tables 1 and 3 were added together with the mixing water. For the examples of table 2, the respective amount of ettringite was added together with the mixing water, while the respective amount of PCE was added after a waiting time of 1 minute after the addition of the mixing water. After addition of the respective amount of PCE as indicated in table 2, mixing was continued for another 1 minute.

Slump flow was measured according to standard EN 12350-5 directly after end of mixing.

In the following table 1, examples 1-1 to 1-6 are comparative examples not according to the present invention. Examples 1-7 to 1-12 are according to the present invention.

**Table 1: Examples 1-1 to 1-12 ([%] are w% relative to cement)**

| Example | PCE [%] | Ettringite nuclei [%] | Slump flow [mm] |
|---|---|---|---|
| 1-1 | 0.135 | 0 | 53 |
| 1-2 | 0.15 | 0 | 71 |
| 1-3 | 0.165 | 0 | 76 |
| 1-4 | 0.175 | 0 | 82 |
| 1-5 | 0.2 | 0 | 91 |
| 1-6 | 0.25 | 0 | 117 |
| 1-7 | 0.135 | 1 | 82 |
| 1-8 | 0.15 | 1 | 108 |
| 1-9 | 0.165 | 1 | 110 |
| 1-10 | 0.175 | 1 | 110 |
| 1-11 | 0.2 | 1 | 117 |
| 1-12 | 0.25 | 1 | 148 |

It can be seen from the results of above table 1 that the addition of ettringite nuclei together with the PCE leads to an increase in slump flow as compared to addition of the same amount of PCE without ettringite. It can also be seen that when ettringite nuclei are added, the amount of PCE needed to achieve a given slump flow is lower.

In the following table 2, examples 2-1 to 2-4 are comparative examples not according to the present invention. Examples 2-5 to 2-8 are according to the present invention.

**Table 2: Examples 2-1 to 2-8 ([%] are w% relative to cement)**

| Example | PCE [%] | Ettringite nuclei [%] | Slump flow [mm] |
|---|---|---|---|
| 2-1 | 0.125 | 0 | 120 |
| 2-2 | 0.135 | 0 | 120 |
| 2-3 | 0.143 | 0 | 134 |
| 2-4 | 0.15 | 0 | 142 |
| 2-5 | 0.125 | 1 | 122 |
| 2-6 | 0.135 | 1 | 127 |
| 2-7 | 0.143 | 1 | 140 |
| 2-8 | 0.15 | 1 | 144 |

It can be seen from the results of above table 2 that the addition of PCE to a reacting cementitious composition comprising added ettringite nuclei leads to a small increase in slump flow as compared to addition of the same amount of PCE without ettringite.

From a comparison of results of table 1 and table 2 it can be seen that a delayed addition of PCE to the cementitious composition can lead to increased slump flow. However, such delayed addition is not always possible in production of cementitious compositions such as e.g. concrete.

In the following table 3, example 3-1 is a comparative example not according to the present invention. Examples 3-2 and 3-3 are according to the present invention.

**Table 3: Examples 3-1 to 3-3 ([%] are w% relative to cement)**

| Example | PCE [%] | Ettringite nuclei [%] | Slump flow [mm] |
|---|---|---|---|
| 3-1 | 0.139 | 0 | 70 |
| 3-2 | 0.139 | 0.32 | 89 |
| 3-3 | 0.139 | 0.66 | 99 |

It can be seen from the above table 3 that an increase in the amount of ettringite nuclei added leads to further improved slump flow.

## Claims

1. A method for the improvement of the workability of an ettringite-forming cementitious composition, said method comprising the steps of
(i) providing a cementitious composition which comprises an ettringite-forming binder,
(ii) adding ettringite nuclei to said cementitious composition, and
(iii) adding at least one polycarboxylate ether to said cementitious composition,
wherein step (ii) is done before and/or together with step (iii).

2. Method according to claim 1, **characterized in that** the ettringite-forming binder is selected from Portland cement, calcium sulfoaluminate cement, aluminate cement, slag, especially ground granulated blast furnace slag, and/or clay, especially calcined clay such as metakaolin, optionally in combination with calcium sulfate, preferably selected from Portland Cement and/or calcium sulfoaluminate cement.

3. Method according to at least one of the preceding claims, **characterized in that** the ettringite nuclei have an aspect ratio between 2 - 20, preferably between 3 -10.

4. Method according to at least one of the preceding claims, **characterized in that** the ettringite nuclei have an average particle size D50 of below 1 micron.

5. Method according to at least one of the preceding claims, **characterized in that** the ettringite nuclei have a BET surface of between 2 - 150 m²/g, preferably of between 5 - 50 m²/g, especially of between 10 - 20 m²/g.

6. Method according to at least one of the preceding claims, **characterized in that** ettringite nuclei are added in an amount of 0.01 - 3 w%, preferably 0.1 - 1.0 w%, more preferably 0.5 - 1.0 w% relative to the ettringite-forming binder.

7. Method according to at least one of the preceding claims, **characterized in that** the at least one polycarboxylate ether is added in an amount of 0.05 - 10 w%, preferably 0.1 - 1 w%, more preferably 0.1 - 0.2 w% relative to the ettringite-forming binder.

8. Method according to at least one of the preceding claims, **characterized in that** additionally mixing water is added to said cementitious composition and that the ettringite nuclei are added together with said mixing water.

9. Method according to at least one of claims 1 - 7, **characterized in that** the ettringite nuclei are added to said cementitious composition before addition of any mixing water.

10. Method according to at least one of the preceding claims, **characterized in that** step (ii) is done together with step (iii).

11. An admixture suitable in a method as claimed in any of claims 1 - 10, said admixture comprising ettringite nuclei and at least one polycarboxylate ether, wherein the at least one polycarboxylate ether comprises structural units **M1** of the formula I 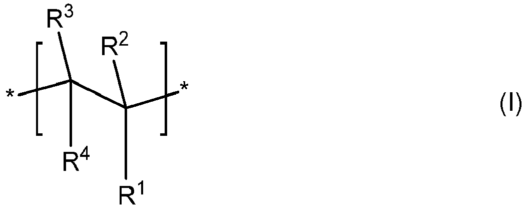 and structural units **M2** of the formula II 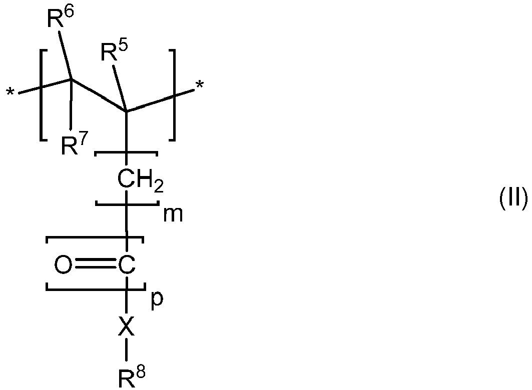 where
R¹, in each case independently, is -COOM, -SO₂-OM, -O-PO(OM)₂ and/or -PO(OM)₂, preferably -COOM
R², R³, R⁵ and R⁶, in each case independently, are H or an alkyl group having 1 to 5 carbon atoms,
R⁴ and R⁷, in each case independently, are H, -COOM or an alkyl group having 1 to 5 carbon atoms,
or where R¹ forms a ring together with R⁴ to give -CO-O-CO-,
M, independently of one another, represents H⁺, an alkali metal ion, an alkaline earth metal ion, a di- or trivalent metal ion, an ammonium ion or an organic ammonium group;
m = 0, 1 or 2,
p = 0 or 1,
X, in each case independently, is -O-, -NH-,
R⁸ is a group of the formula -(CH₂)_{z}-[AO]ₙ-R^{a}, where z = 0, 1, 2, 3, or 4, and where A = C₂- to C₄-alkylene, R^{a} is H, a C₁- to C₂₀-alkyl group, -cycloalkyl group or -alkylaryl group,
and n = 2-250, especially 10-200.

12. Admixture according to claim 11, **characterized in that** the ettringite nuclei are dispersed in a dispersion or solution of the at least one polycarboxylate ether in a liquid, preferably in water.

13. Admixture according to claim 11, **characterized in that** the ettringite nuclei and the at least one polycarboxylate ether are present in spatially separate containers.

14. A cementitious composition comprising
a) at least one ettringite-forming binder, especially a cementitious binder,
b) ettringite nuclei, and
c) at least one polycarboxylate ether comprising structural units **M1** and **M2** as claimed in claim 11, and
d) optionally water.
